Europäisches Patentamt

European Patent Office

Office européen des brevets

(19)

(11) Veröffentlichungsnummer: **0 256 418**
**B1**

# (12) EUROPÄISCHE PATENTSCHRIFT

(45) Veröffentlichungstag der Patentschrift:
07.02.90

(51) Int. Cl.⁴: **C09C 1/00**

(21) Anmeldenummer: **87111226.4**

(22) Anmeldetag: **04.08.87**

(54) **Leicht dispergierbare Perlglanzpigmentpräparationen.**

(30) Priorität: **12.08.86 DE 3627329**

(43) Veröffentlichungstag der Anmeldung:
**24.02.88 Patentblatt 88/8**

(45) Bekanntmachung des Hinweises auf die Patenterteilung:
**07.02.90 Patentblatt 90/6**

(84) Benannte Vertragsstaaten:
**BE DE ES FR GB IT**

(56) Entgegenhaltungen:
**US-A- 4 205 997**

(73) Patentinhaber: **MERCK PATENT GESELLSCHAFT MIT BESCHRÄNKTER HAFTUNG, Frankfurter Strasse 250 Postfach 4119, D-6100 Darmstadt(DE)**

(72) Erfinder: **Kleser, Manfred, Dr., Händelstrasse 29, D-6100 Darmstadt(DE)**
Erfinder: **Stahlecker, Otto, Frankfurter Landstrasse 36, D-6100 Darmstadt(DE)**

**Beschreibung**

Die Erfindung betrifft eine Pigmentpräparation, wobei ein plättchenförmiges Perlglanzpigment mit einem Polymerharz und gegebenenfalls Weichmachern, Lösungsmitteln und Tensiden beschichtet ist.

Perlglanzpigmente können aufgrund ihrer plättchenförmigen Struktur nicht wie herkömmliche Pigmente unter Einwirkung hoher Scherkräfte dispergiert werden, da hierbei die Pigmentplättchen zerbrechen und damit der Perlglanz gemindert oder gar ganz zerstört wird.

Es wurden daher vielfältig Anstrengungen gemacht, das Problem der Einarbeitung von Perlglanzpigmenten, insbesondere in thermoplastische Kunststoffe, zu lösen. Wismutoxychlorid und basisches Bleicarbonat werden daher in der Regel in bereits vordispergierter Form als Paste eingesetzt. Im Falle von Metalloxid/Glimmer-Pigmenten lassen sich solche Pasten jedoch nur mit bis zu maximal 40-45 Gew.% Pigment herstellen.

Aus der DE-OS 26 03 211 ist es bekannt, die Pigmentteilchen durch eine Umhüllung mit einem festen Polymeren, das sich in dem Medium, in welchem das Pigment verteilt werden soll, auflöst, in eine vordispergierte Form zu bringen. Diese Umhüllung muß jedoch in einem relativ aufwendigen Verfahren aufgebracht werden.

Aus der DE-OS 32 21 044 ist ein flüssiges Haftmittel bekannt, mit dem das Polymergranulat benetzt wird, bevor ein pulverförmiges Perlglanzpigment zugemischt wird. Mit diesem Verfahren werden jedoch nur die beim Einfärben von granulatförmigem Kunststoff auftretenden Probleme gelöst und das Verfahren ist für den Anwender immer noch zu aufwendig.

Es bestand deshalb die Aufgabe, eine Pigmentpräparation zu finden, die ein direktes Einarbeiten eines pulverförmigen Perlglanzpigments in Kunststoffe erlaubt, ohne daß zusätzliche Verfahrensschritte notwendig sind.

Diese Aufgabe wurde durch die vorliegende Erfindung gelöst. Es wurde nämlich gefunden, daß durch Aufbringen einer flüssigen Mischung eines Polymeren mit Lösungsmitteln, Weichmachern und gegebenenfalls Tensiden auf ein Perlglanzpigment eine pulverförmige, nicht staubende Perlglanzpigmentpräparation erhalten wird, die eine sehr gute Dispergierbarkeit und verbesserte Wechselwirkung zwischen Pigment und Bindemittel besitzt, wodurch eine deutlich verbesserte Verteilung des Pigments erzielt wird und eine verringerte Neigung zum sogenannten "plate out".

Gegenstand der Erfindung ist daher eine Pigmentpräparation, wobei ein plättchenförmiges Perlglanzpigment mit einem Polymerharz und gegebenenfalls Weichmachern, Lösungsmitteln und Tensiden beschichtet ist, die dadurch gekennzeichnet ist, daß die Präparation 0,2-30 Gew.% einer Mischung von 2 bis 50 Gew.% eines Polyester/Polyurethan-Blockcopolymeren mit tertiären Aminogruppen, 0 bis 75 Gew.% eines Weichmachers bzw. Weichmachergemisches, 0 bis 75 Gew.% eines Lösungsmittels bzw. Lösungsmittelgemisches und 0 bis 10 Gew.% eines Tensids enthält.

Gegenstand der Erfindung ist auch ein Verfahren zur Herstellung einer pulverförmigen, gut dispergierbaren Perlglanzpigmentpräparation, das dadurch gekennzeichnet ist, daß das Perlglanzpigment unter langsamer Bewegung mit 0,2 bis 30 Gew.% einer Mischung aus 2 bis 50 Gew.% eines Polyester/Polyurethan-Blockcopolymeren mit tertiären Aminogruppen, 0 bis 75 Gew.% eines Lösungsmittels bzw. Lösungsmittelgemisches, 0 bis 75 Gew.% eines Weichmachers und 0 bis 10 Gew.% eines Tensids benetzt, ggf. das Lösungsmittel unter weiterer Bewegung des Pigments entfernt und ggf. die pulverförmige frei fließende Perlglanzpigmentpräparation gesiebt wird.

Als Perlglanzpigmente werden in die erfindungsgemäßen Präparationen insbesondere mit Metalloxiden beschichtete Glimmerschuppenpigmente eingesetzt. Diese Pigmente sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 35 017 bekannt.

Wesentlicher Bestandteil des Belegungsmittels ist ein polymeres Harz mit pigmentaffinen Gruppen, das in einer Menge von etwa 2 bis 50 Gew.%, insbesondere etwa 5 bis 25 Gew.%, auf das Pigment aufgebracht wird. Als Harz wird ein Polyester/Polyurethan-Blockcopolymeres mit tertiären Aminogruppen eingesetzt, das eine Dichte von etwa 0,90-1,10 g/cm³ und eine Aminzahl von 10-28 mg KOH pro g aufweist.

Daneben können gegebenenfalls auch übliche Weichmacher, wie z.B. Phthalate, Adipate und Polymerweichmacher in Mengen von 0 bis 75 Gew.%, insbesondere etwa 20 bis 40 Gew.%, sowie gegebenenfalls 0 bis 10 Gew.%, insbesondere etwa 0,5 bis etwa 2,5 Gew.%, eines Tensids zugefügt werden.

Als Weichmacher werden z.B. Phthalsäureester mit linearen, verzweigten oder zyklischen Alkoholen mit bis zu 12 C-Atomen, Ester der Adipin-, Sebazin- oder Azelainsäure, Fettsäureester, Zitronensäureester sowie andere Weichmacher, die z.B. in Kirk-Othmer, Vol. 15, S. 720-789 beschrieben sind, eingesetzt. Als Tenside kommen im Prinzip alle anionischen, kationischen, ampholytischen und nichtionischen Tenside in Betracht.

Zum Aufbringen des Belegungsmittels auf das Pigment wird dem Polymeren und den anderen Bestandteilen gegebenenfalls ein Lösungsmittel zugesetzt, wie z.B. Ester, Alkohole, Äther und Aromaten, insbesondere mit Molekulargewichten bis zu etwa 200.

Das Aufbringen des Belegungsmittels auf das Pigment erfolgt durch einfaches Mischen, z.B. in einem Taumelmischer, Schaufelmischer oder Fluidmischer, wobei wegen der relativ hohen Bruchanfälligkeit der Pigmente langsam laufende Mischer bevorzugt werden. Nach dem Beschichten der Ausgangspigmente mit dem Belegungsmittel und ggf. Entfernung des Lösungsmittels kann die Pigmentpräparation gesiebt werden. Die Perlglanzpigmentpräparation kann danach unmittelbar ohne weitere Vorbehandlung in thermoplastische Polymere eingearbeitet werden.

## Beispiel 1

In einem Schaufelmischer werden 85 g Iriodin® 100 Silberperl (mit Titandioxid beschichtetes Glimmerschuppenpigment der E. Merck, Darmstadt, mit einer Teilchengrößenverteilung von 10-60 μm) mit 15 g einer Lösung von 3,6 Teilen eines Polyester/Polyurethan-Blockcopolymeren mit tertiären Aminogruppen (nicht flüchtiger Anteil des von Byk-Chemie vertriebenen Disperbyk®-163), 3,5 Teilen Dibutylphthalat, 3,5 Teilen Glykolsäurebutylester, 0,88 Teilen Butylacetat, 0,88 Teilen Methoxypropylacetat und 2,64 Teilen Xylol gemischt. Man erhält ein nahezu staubfreies Produkt, das immer noch gut rieselfähig ist und bei der Einarbeitung in thermoplastische Kunststoffe eine sehr gute Verträglichkeit zum Kunststoff aufweist.

## Beispiel 2

In einem Schaufelmischer werden 80 g Iriodin® 120 Glanzsatin (mit Titandioxid beschichtetes Glimmerschuppenpigment der E. Merck, Darmstadt, mit einer Teilchengrößenverteilung von 5-25 μm) mit 20 g einer Lösung von 1 Teil eines Polyester/Polyurethan-Blockcopolymeren mit tertiären Aminogruppen (nicht flüchtiger Anteil des von Byk-Chemie vertriebenen Disperbyk®-163), 1 Teil Di-2-äthylhexyladipat, 0,6 Teilen Butylacetat, 0,24 Teilen Methoxypropylacetat und 0,68 Teilen Xylol gemischt. Nach dem Sieben erhält man ein nahezu staubfreies Produkt, das immer noch gut rieselfähig ist und bei der Einarbeitung in thermoplastische Kunststoffe eine sehr gute Verträglichkeit zum Kunststoff aufweist.

## Beispiel 3

In einem Schaufelmischer werden 90 g Iriodin® 300 Goldperl (mit Titandioxid und Eisenoxid beschichtetes Glimmerschuppenpigment der E. Merck, Darmstadt, mit einer Teilchengrößenverteilung von 10-60 μm) mit 10 g einer Lösung eines Polyester/Polyurethan-Blockcopolymeren mit tertiären Aminogruppen (nicht flüchtiger Anteil des von Byk-Chemie vertriebenen Disperbyk®-163), 2 Teilen Glykolsäurebutylester, 5 Teilen Butylacetat, 1,2 Teilen Methoxypropylacetat und 3,4 Teilen Xylol gemischt. Man erhält nach dem Sieben ein nahezu staubfreies Produkt, das immer noch gut rieselfähig ist und bei der Einarbeitung in thermoplastische Kunststoffe eine sehr gute Verträglichkeit zum Kunststoff aufweist.

## Beispiel 4

In einem Schaufelmischer werden 95 g Iriodin® 100 Silberperl (mit Titandioxid beschichtetes Glimmerschuppenpigment der E. Merck, Darmstadt, mit einer Teilchengrößenverteilung von 10-60 μm) mit 15 g einer Lösung von 1 Teil eines Polyester/Polyurethan-Blockcopolymeren mit tertiären Aminogruppen (nicht flüchtiger Anteil des von Byk-Chemie vertriebenen Disperbyk®-163), 1 Teil Dibutylphthalat, 0,08 Teilen Tween 80, 1 Teil Glykolsäurebutylester, 1,00 Teilen Butylacetat, 0,24 Teilen Methoxypropylacetat und 0,68 Teilen Xylol gemischt. Nachdem die Lösung gleichmäßig auf der Pigmentoberfläche verteilt ist, wird der Mischvorgang zur Beseitigung flüchtiger Substanzen (Lösemittel) unter Vakuum (0,01 bar) noch einige Zeit fortgesetzt. Man erhält nach dem Sieben ein nahezu staubfreies Produkt, das immer noch gut rieselfähig ist und bei der Einarbeitung in thermoplastische Kunststoffe eine sehr gute Verträglichkeit zum Kunststoff aufweist.

## Patentansprüche

1. Pigmentpräparation, wobei ein plättchenförmiges Perlglanzpigment mit einem Polymerharz und gegebenenfalls Weichmachern, Lösungsmitteln und Tensiden beschichtet ist, dadurch gekennzeichnet, daß die Präparation 0,2-30 Gew.% einer Mischung von 2 bis 50 Gew.% eines Polyester/Polyurethan-Blockcopolymeren mit tertiären Aminogruppen, 0 bis 75 Gew.% eines Weichmachers bzw. Weichmachergemisches, 0 bis 75 Gew.% eines Lösungsmittels bzw. eines Lösungsmittelgemisches und 0 bis 10 Gew.% eines Tensids enthält.

2. Pigmentpräparation nach Anspruch 1, dadurch gekennzeichnet, daß das Perlglanzpigment ein mit Metalloxiden beschichtetes Glimmerschuppenpigment ist.

3. Verfahren zur Herstellung einer pulverförmigen, gut dispergierbaren Perlglanzpigmentpräparation, dadurch gekennzeichnet, daß das Perlglanzpigment unter langsamer Bewegung mit 0,2 bis 30 Gew.% einer Mischung aus 2-50 Gew.% eines Polyester/Polyurethan-Blockcopolymeren mit tertiären Aminogruppen, 0-75 Gew.% eines Lösungsmittels bzw. Lösungsmittelgemisches, 0-75 Gew.% eines Weichmachers und 0-10 Gew.% eines Tensids benetzt, ggf. das Lösungsmittel unter weiterer Bewegung des Perlglanzpigments entfernt und ggf. die pulverförmige frei fließende Perlglanzpigmentpräparation gesiebt wird.

4. Verfahren nach Anspruch 3, dadurch gekennzeichnet, daß als Perlglanzpigment ein mit Metalloxiden beschichtetes Glimmerschuppenpigment eingesetzt wird.

## Claims

1. Pigment preparation in which a platelet-shaped nacreous pigment is coated with a polymer resin and, if appropriate, plasticizers, solvents and surfactants, characterized in that the preparation contains 0.2–30% by weight of a mixture of 2 to 50% by weight of a polyester/polyurethane block copolymer with tertiary amino groups, 0 to 75% by weight of a plasticizer or plasticizer mixture, 0 to 75% weight of a solvent or solvent mixture and 0 to 10% by weight of a surfactant.

2. Pigment preparation according to claim 1, characterized in that the nacreous pigment is a mica flake pigment coated with metal oxides.

3. Process for the preparation of a pulverulent, readily dispersible nacreous pigment preparation, characterized in that the nacreous pigment is wetted, with slow agitation, with 0.2 to 30% by weight of a mixture of 2 to 50% by weight of a polyester/polurethane block copolymer with tertiary amino groups, 0 to 75% by weight of a solvent or solvent mixture, 0 to 75% by weight of a plasticizer and 0 to 10% by weight of a surfactant, the solvent is removed, if appropriate, with further agitation of the pigment, and, if appropriate, the pulverulent free-flowing nacreous pigment preparation is sieved.

4. Process according to claim 3, characterized in that a mica flake pigment coated with metal oxides is used as the nacreous pigment.

## Revendications

1. Composition pigmentaire, dans laquelle un pigment nacré lamellaire est enduit avec une résine polymère et, selon les cas, des plastifiants, des solvants et des tensioactifs, caractérisée en ce que la composition contient de 0,2 à 30% poids d'un mélange comprenant 2 à 50% poids d'un copolymère à blocs de polyester/polyuréthane avec des groupements amino tertiaires, 0 à 75% poids d'un plastifiant ou mélange de plastifiants, 0 à 75% poids de solvant ou d'un mélange de solvants et de 0 à 10% poids d'un tensio-actif.

2. Composition pigmentaire selon revendication 1, caractérisée en ce que le pigment nacré est un pigment de mica lamellaire enduit d'oxydes métalliques.

3. Procédé de fabrication d'une composition de pigment nacré, pulvérulente et facilement dispersable caractérisé en ce que le pigment nacré est mouillé par un brassage lent avec 0,2 à 30% poids d'un mélange de 2 à 50% poids d'un copolymère à blocs de polyester/polyuréthane avec des groupements amino tertiaires, 0 à 75% poids d'un solvant ou d'un mélange de solvants, 0 à 75% poids d'un plastifiant et de 0 à 10% poids d'un tensio-actif, le solvant est éventuellement éliminé en continuant de remuer le pigment nacré et la composition de pigment nacré obtenue sous forme de poudre fluide est éventuellement tamisée.

4. Procédé, selon la revendication 3, caractérisé en ce qu'on met en œuvre comme pigment nacré, un pigment de mica lamellaire revêtu d'oxydes métalliques.